(19)

**Europäisches Patentamt**

**European Patent Office**

**Office européen des brevets**

(11)  **EP 4 676 040 A1**

(12)  **EUROPEAN PATENT APPLICATION**

(43) Date of publication:
07.01.2026  Bulletin 2026/02

(21) Application number: 24306102.5

(22) Date of filing: 04.07.2024

(51) International Patent Classification (IPC):
$H04N\ 19/117^{(2014.01)}$    $H04N\ 19/70^{(2014.01)}$
$H04N\ 19/156^{(2014.01)}$    $H04N\ 19/85^{(2014.01)}$

(52) Cooperative Patent Classification (CPC):
H04N 19/117; H04N 19/156; H04N 19/70;
H04N 19/85

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• DEMARTY, Claire-Helene
  35520 MONTREUIL LE GAST (FR)

• AUMONT, Franck
  35770 VERN SUR SEICHE (FR)
• LE MEUR, Olivier
  35160 TALENSAC (FR)
• REINHARD, Erik
  35630 HEDE-BAZOUGES (FR)
• BLONDE, Laurent
  35235 THORIGNE-FOUILLARD (FR)

(74) Representative: Vossius & Partner
Patentanwälte Rechtsanwälte mbB
Siebertstraße 3
81675 München (DE)

(54)  **NEURAL NETWORK POST FILTER FOR ENERGY ADAPTATION**

(57)  Systems, methods, and instrumentalities are disclosed associated with neural network post filter for energy adaptation. Messages associated with energy adaptation operations may be signaled and/or used. The messages may be associated with neural network post-filter characteristics (NNPFC) and/or supplemental enhancement information (SEI). The message may be an NNPFC SEI message. Adaptation in terms of energy consumption of content (e.g., decoded content) may be performed, for example, based on a received NNPFC SEI message. An NNPFC SEI message may enable reduction of energy consumption of a content while used. An NNPFC SEI message may enable increase of energy consumption of a content, for example, if the increase in energy is associated with an increased quality of experience (QoE) associated with the content.

FIG. 5

EP 4 676 040 A1

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed associated with neural network post filter for energy adaptation. Messages associated with energy adaptation operations may be signaled and/or used. The messages may be associated with neural network post-filter characteristics (NNPFC) and/or supplemental enhancement information (SEI). The message may be an NNPFC SEI message. Adaptation in terms of energy consumption of content (e.g., decoded content) may be performed, for example, based on a received NNPFC SEI message. An NNPFC SEI message may enable reduction of energy consumption of a content while used. An NNPFC SEI message may enable increase of energy consumption of a content, for example, if the increase in energy is associated with an increased quality of experience (QoE) associated with the content.

A device (e.g., video encoder, video decoder) may use neural network post filter(s) for energy adaptation. The device may decode (e.g., receive) a neural-network post-filter characteristic (NNPFC) SEI message. The NNPFC SEI message may include an energy adaptation indication (e.g., energy adaptation flag) and/or a metadata parameter set. The energy adaptation indication may indicate whether a modification of the content by increasing or decreasing energy consumption associated with the content is activated. The metadata parameter set may include at least an indication of an NNPFC energy ratio and/or an indication of an NNPFC energy ratio sign. The NNPFC energy ratio sign may indicate the sign of the NNPFC energy ratio. The NNPFC energy ratio may indicate an amount of energy reduction or augmentation. The NNPFC energy ratio may indicate a percentage of energy ratio or an amount of energy adaptation the energy adaptation NNPF may (e.g., should) achieve. The NNPFC energy ratio may indicate a balance of energy between energy consumed while applying the energy adaptation NNPF and/or energy saved or lost while using, e.g.,displaying the modified content. The metadata parameter set may include one or more of the following: an NNPFC expected quality; an NNPFC quality metric; an NNPFC display model; an NNPFC energy mode; etc. The NNPFC expected quality may indicate a quality of a modified content after applying an energy adaptation NNPF. The NNPFC video quality metric may indicate a quality metric to be considered when considering the change of quality when performing balancing between quality level and energy adaptation. The NNPFC display model may indicate at least one display model on which the energy adaptation NNPFF may be used. The NNPFC energy mode may indicate an energy adaptation type being applied to the content. The device may determine whether the energy adaptation is activated, for example, based on the energy adaptation indication (e.g., energy adaptation flag). The device may obtain the metadata parameters set from the NNPFC SEI message, for example, based on a determination that the energy adaptation is activated. The device may apply (e.g., to a content) an energy adaptation neural-network post-filter (NNPF) associated with the energy adaptation indication and/or the metadata parameters set, for example, to generate a modified content. The device may send the modified content (e.g., displaying, use for the application of another NNPF, etc.).

In examples, an NNPFC separate colour description present indication (e.g., NNPFC separate colour description present flag) may be determined, signaled, and/or received. The device may determine whether the NNPFC separate colour description present indication is enabled. The device may process components (e.g., YUV or RBG components) of the content (e.g., based on an energy adaptation NNPF filter type), for example, based on the determination that the NNPFC separate colour description present indication is enabled.

In examples, the device may determine that an event (e.g., external event) is triggered. The event may indicate a request for decreasing or increasing energy consumption of the content when used. The event may indicate that the event is an external event. For example, the energy adaptation NNPF associated with the energy adaptation indication and the metadata parameter set may be applied based on a determination that the NNPFC energy ratio sign indicates that the energy adaptation is of a decreasing trend and the event is an external event associated with an economy user profile. In another example, the energy adaptation NNPF associated with the energy adaptation indication and the metadata parameter set may be applied based on a determination that the NNPFC energy ratio sign indicates that the energy adaptation is of an increasing trend and the event is an extra battery level. The device may determine that the event indicates decreasing or increasing energy consumption of the content when used. The device may determine that an energy saving user profile exists, for example, based on the determination that the event indicates decreasing energy consumption of the content when used. The energy saving user profile may indicate one or more of the following: an eco mode; a low level of battery; a system decision associated with the eco mode. The device may determine that an eco user profile mode or an additional battery level exists, for example, based on a determination that the event is an external event.

In examples, the device (e.g., video decoding device, video encoding device) may determine whether to apply energy adaptation NNPF. Based on a determination to apply energy adaptation NNPF, the device may obtain a metadata parameter set associated with energy adaptation NNPF. The device may include (e.g., in video data), at least an energy adaptation indication (e.g., flag) and/or the metadata parameter set NNPF indicating that energy adaptation NNPF may be applied.

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). A computer-readable medium may include instructions for causing one or more processors to perform methods described herein. A computer program product may include instructions which, when the program is executed by one or more processors, may cause the one or more processors to carry out the methods described herein.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a a system in which various aspects and examples may be implemented.

FIG. 5 illustrates an example implementation of a neural network post-filter for energy adaptation.

FIG. 6 illustrates an example implementation of a neural network post-filter for energy adaptation with an event for reducing the energy consumption.

FIG. 7 illustrates an example implementation of a neural network post-filter for energy adaptation with an extra level of battery.

## DETAILED DESCRIPTION

A more detailed understanding may be had from the following description, given by way of example in conjunction with the accompanying drawings.

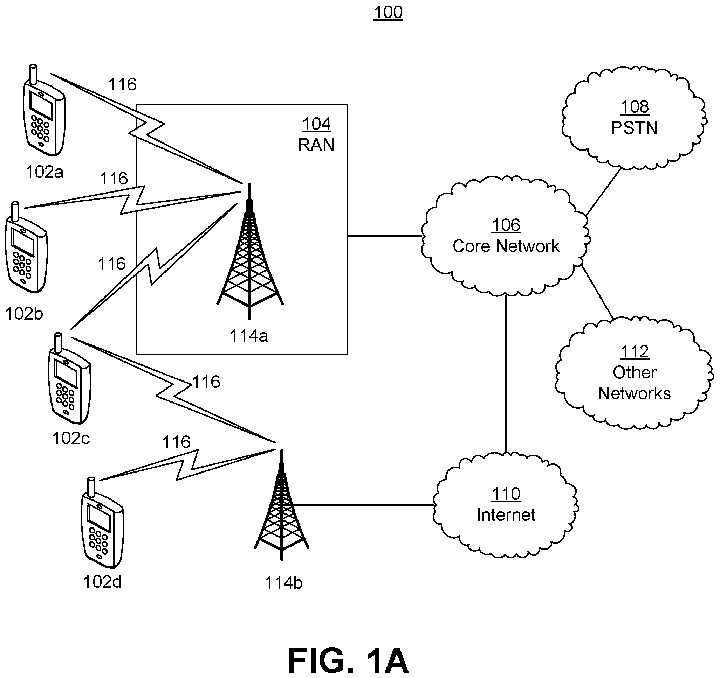

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

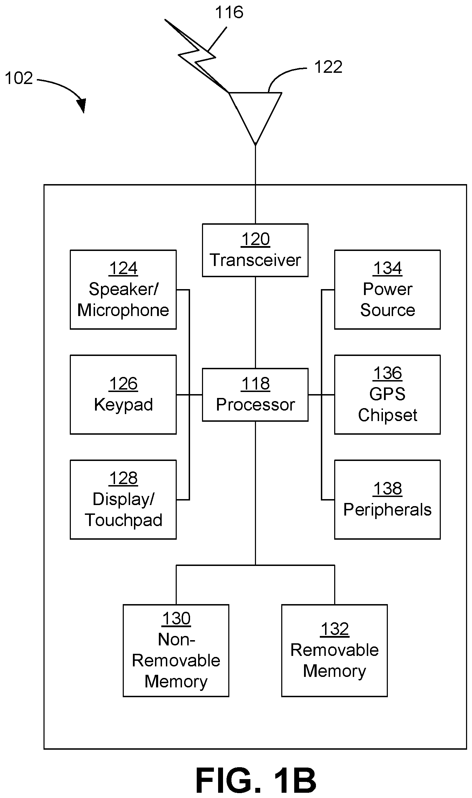

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

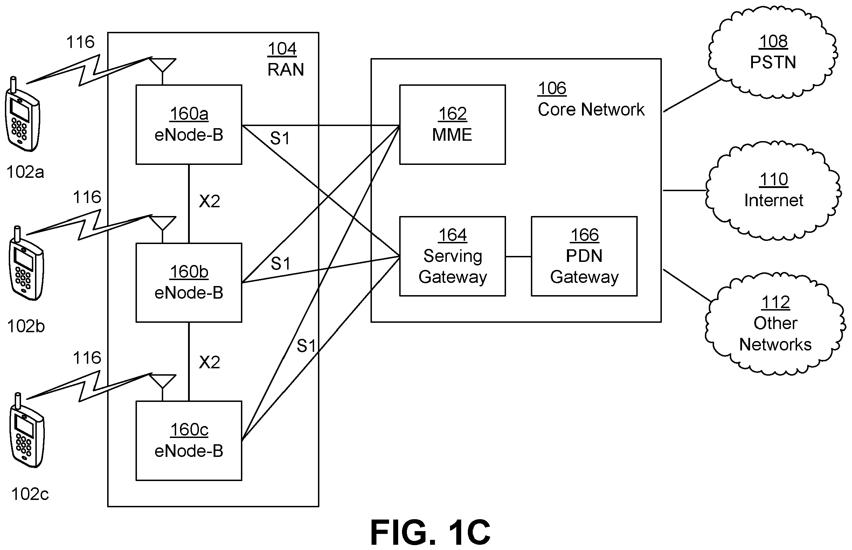

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

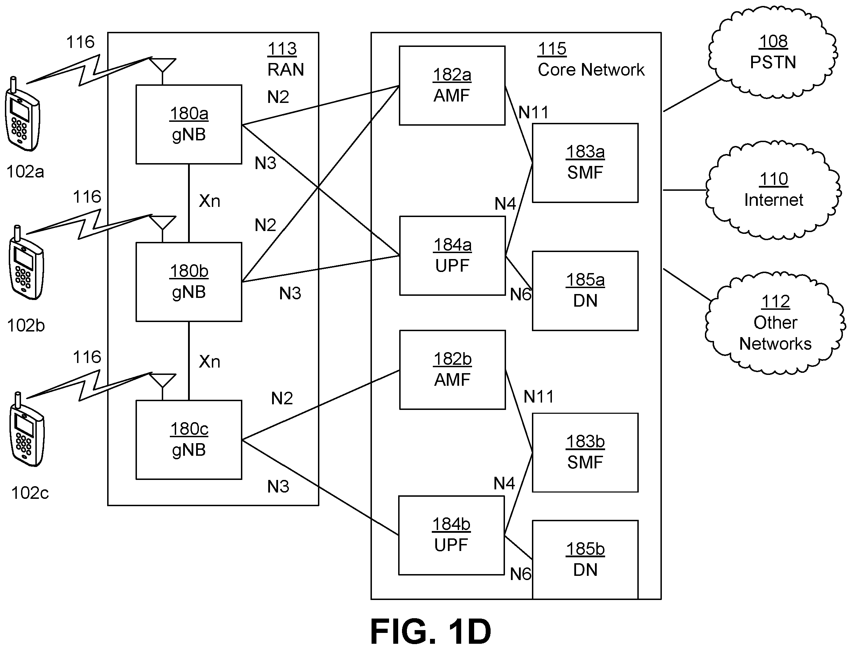

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

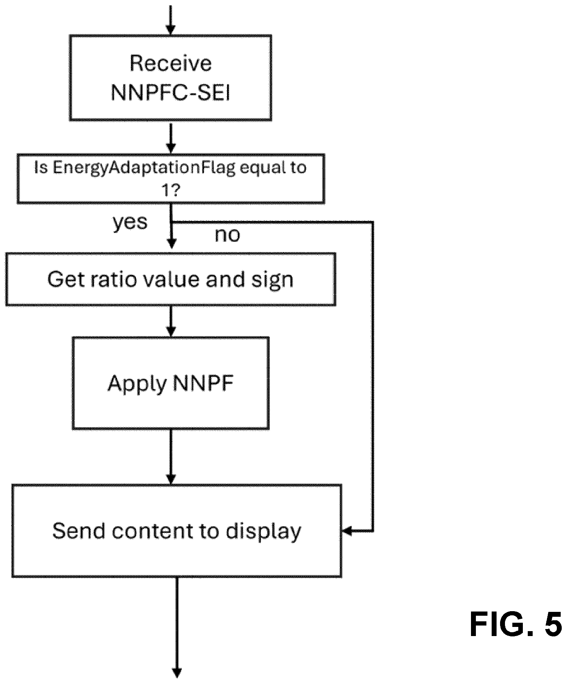

The aspects described and contemplated in this application may be implemented in many different forms. FIGS. 5-7 described herein may provide some examples, but other examples are contemplated. The discussion of FIGS. 5-7 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

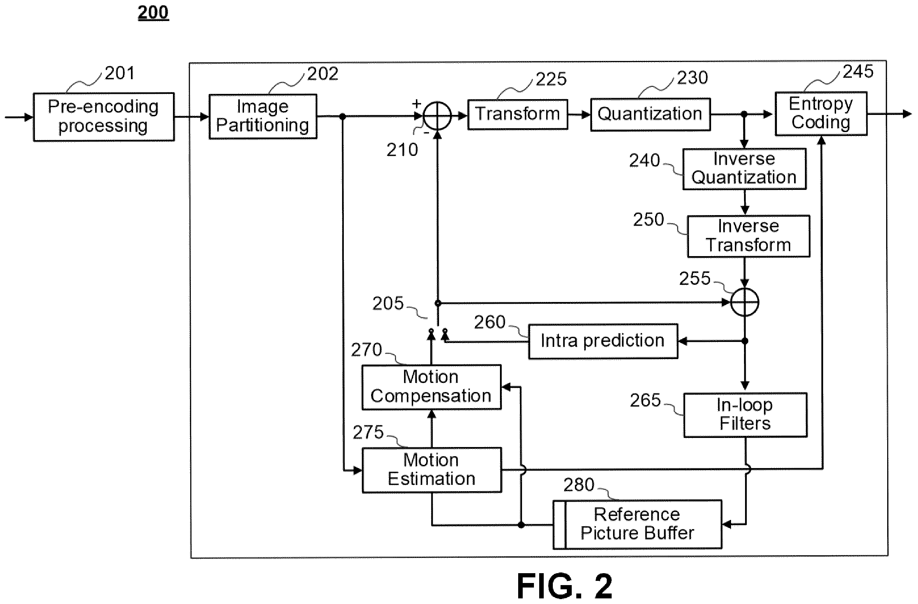

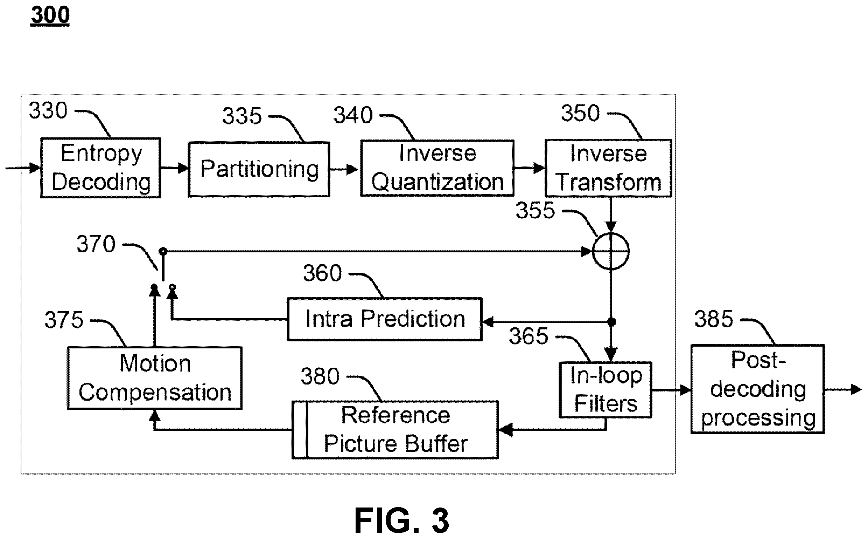

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether preexisting or future-developed, and extensions of any such standards and recommendations. Unless indicated otherwise, or technically precluded, the aspects described in this application may be used individually or in combination.

Various numeric values are used in examples described the present application, such as, energy ratio, energy reduction, energy increase, NNPFC purpose, energy mode values, energy mode values, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

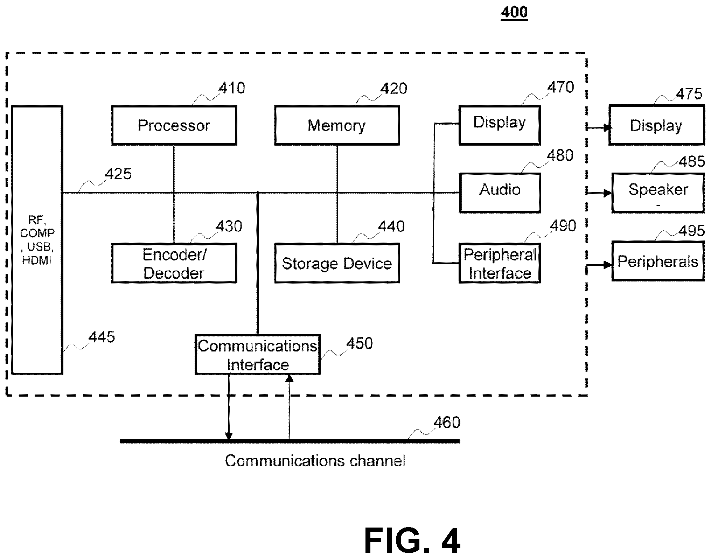

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, decoding a neural-network post-filter characteristics (NNPFC) supplemental enhancement information (SEI) message, determining (e.g., based on an energy adaptation flag, whether energy adaptation is activated, obtaining metadata parameters set from an NNPFC SEI message, applying an energy adaptation neural-network post-filter (NNPF) associated with the energy adaptation flag and the metadata parameters set to a content to generate a modified content, send the modified content for further use, e.g., displaying, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, encoding a neural-network post-filter characteristics (NNPFC) supplemental enhancement information (SEI) message, determining (e.g., based on an energy adaptation flag, whether energy adaptation is activated, obtaining metadata parameters set from an NNPFC SEI message, applying an energy adaptation neural-network post-filter (NNPF) associated with the energy adaptation flag and the metadata parameters set to a content to generate a modified content, send the modified content for displaying, etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, coding syntax on energy adaptation indication, bit mask, nnpfc_purpose, EnergyAdaptationFlag, nnpfc_energy_ratio, nnpfc energy_ratio sign flag, nnpfc_expected_quality, nnpfc_quality_metric, nnpfc display_model, nnpfc_energy_mode, nnpfc separate colour description_present flag, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, video data indicating an NNPFC SEI message, NNPFC indications, such as NNPFC purpose, e.g., for energy adaptation, content (e.g., modified content), etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Energy consumption may be adapted for images (e.g., some images), for example, while being used (e.g., displayed).

General inputs may be provided.

Neural-network post-filter SEI messages may be provided, for example, for video compression. Details associated with enabling, providing, or using neural network post filters may be provided herein.

A message may specify a neural network to be used as a post-processing filter. For example, a neural-network post-filter characteristics (NNPFC) SEI message may specify a neural network that may be used as a post-processing filter.

The NNPFC SEI message may enable (e.g., allow) a device (e.g., encoder or decoder) to define a neural network to be used in a post-processing operation, for example, after the decoding operation. This message may specify the input and/or output of the neural network. The message may describe its complexity.

The NNPFC SEI message may indicate the intended purpose of the neural network. Modes (e.g., 8 modes) may be defined (e.g., for an intended purpose of a neural network), for example, such as one or more of the following: enhancing visual quality; chroma upsampling; changing spatial resolution, e.g., from high-definition decoded video to ultra-high definition; upsampling picture rate, e.g., from 30 Hz to 60 Hz; upsampling bit depth to increase the dynamic range of pixel values; colorization to convert monochrome video to full colors; temporal extrapolation; spatial extrapolation; etc.

Table 1 illustrates example modes for a purpose for a neural network.

Table 1: Example definitions of nnpfc_purpose

| bitMask | Interpretation |
| --- | --- |
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |

Neural-network filters may be implemented as a post-processing step. Using a neural network filter as a post-processing step may be used for service(s) (e.g., some services), for example, without negatively impacting older systems that lack the ability to execute neural networks.

Details associated with energy-aware images may be provided herein.

Energy consumption may be reduced. Reducing the energy consumption of electronic devices may be a requirement for electronic devices manufacturers, for limiting (e.g., as much as possible) the environmental impact, and/or for contributing to the emergence of a sustainable display industry.

The increase in display resolution (e.g., from SD to HD to 4K and soon to 8K and beyond) and/or the introduction of high dynamic range imaging may increase energy requirements of display devices (e.g., which may not be consistent with the global aim/need to reduce energy consumption).

Displays may be a source (e.g., important source) of energy consumption, for example, for battery-powered devices (e.g., smartphones) or the global video distribution chain.

Organic Light Emitting Diode (OLED) displays may be used (e.g., widespread use), for example, because of numerous advantages compared to transmissive displays such as Thin-Film Transistor Liquid Crystal Displays (TFT-LCDs). Rather than using a uniform backlight, OLED displays may be composed of LEDs as image pixels. OLEDs power consumption may be correlated (e.g., highly correlated) to the image content and may be readily estimated by considering the luminance level of the displayed image pixels.

OLED displays may consume energy in a controllable manner. OLEDs may be associated with a source (e.g., most important source) of energy consumption in a video transmission chain.

Energy-aware images (e.g., those that will need less energy when displayed on CE displays, notably OLED displays) may be considered.

Energy-aware transformations may be applied to contents. Energy-aware transformations may include luma and color manipulation of the content, for example, to create an output of content (e.g., new content) that may consume less energy when displayed.

Systems, methods, and instrumentalities are disclosed associated with neural network post filter for energy adaptation. Messages associated with energy adaptation operations may be signaled and/or used. The messages may be associated with neural network post-filter characteristics (NNPFC) and/or supplemental enhancement information (SEI). The message may be an NNPFC SEI message. Adaptation in terms of energy consumption of content (e.g., decoded content) may be performed, for example, based on a received NNPFC SEI message. An NNPFC SEI message may enable adaptation, e.g., increase of decrease, of energy consumption of a content while used. An NNPFC SEI message may enable decrease of energy consumption of a content, for example, if an external event requests for a decrease in energy consumption. An NNPFC SEI message may enable increase of energy consumption of a content, for example, if the increase in energy is associated with an increased quality of experience (QoE) associated with the content.

A device (e.g., video encoder, video decoder) may use neural network post filter(s) for energy adaptation. The device may decode (e.g., receive) a neural-network post-filter characteristic (NNPFC) SEI message. The NNPFC SEI message may include an energy adaptation indication (e.g., energy adaptation flag) and/or a metadata parameter set. The energy adaptation indication may indicate whether a modification of the content by increasing or decreasing energy consumption associated with the content is activated. The metadata parameter set may include at least an indication of an NNPFC energy ratio and/or an indication of an NNPFC energy ratio sign. The NNPFC energy ratio sign may indicate the sign of the NNPFC energy ratio. The NNPFC energy ratio may indicate an amount of energy reduction or augmentation.

The NNPFC energy ratio may indicate a percentage of energy ratio or an amount of energy adaptation the energy adaptation NNPF may (e.g., should) achieve. The NNPFC energy ratio may indicate a balance of energy between energy consumed while applying the energy adaptation NNPF and energy saved or lost while using, e.g., displaying, the modified content. The metadata parameter set may include one or more of the following: an NNPFC expected quality; an NNPFC quality metric; an NNPFC display model; an NNPFC energy mode; etc. The NNPFC expected quality may indicate a quality level of a modified content after applying an energy adaptation NNPF. The NNPFC quality metric may indicate a quality metric to be considered when considering change of quality when performing balancing between quality level and energy adaptation. The NNPFC display model may indicate at least one display model on which the energy adaptation NNPFF may be used. The NNPFC energy mode may indicate an energy adaptation type being applied to the content. The device may determine whether the energy adaptation is activated, for example, based on the energy adaptation indication (e.g., energy adaptation flag). The device may obtain the metadata parameters set from the NNPFC SEI message, for example, based on a determination that the energy adaptation is activated. The device may apply (e.g., to a content) an energy adaptation neural-network post-filter (NNPF) associated with the energy adaptation indication and/or the metadata parameters set, for example, to generate a modified content. The device may send the modified content for further use, e.g., displaying.

In examples, an NNPFC separate colour description present indication (e.g., NNPFC separate colour description present flag) may be determined, signaled, and/or received. The device may determine whether the NNPFC separate colour description present indication is enabled. The device may process components (e.g., YUV or RBG components) of the content (e.g., based on an energy adaptation NNPF filter type), for example, based on the determination that the NNPFC separate colour description present indication is enabled.

In examples, the device may determine that an event (e.g., external event) is triggered. The event may indicate decreasing or increasing energy consumption of the content when used. The event may indicate that the event is an external event. For example, the energy adaptation NNPF associated with the energy adaptation indication and the metadata parameter set may be applied based on a determination that the NNPFC energy ratio sign indicates that the energy adaptation is of a decreasing trend and the event is an external event associated with an economy user profile. In another example, the energy adaptation NNPF associated with the energy adaptation indication and the metadata parameter set may be applied based on a determination that the NNPFC energy ratio sign indicates that the energy adaptation is of an increasing trend and the event is an extra battery level. The device may determine that the event indicates decreasing or increasing energy consumption of the content when used. The device may determine that an energy saving user profile exists, for example, based on the determination that the event indicates decreasing energy consumption of the content when used. The energy saving user profile may indicate one or more of the following: an eco mode; a low level of battery; a system decision associated with the eco mode. The device may determine that an eco user profile mode or an additional battery level exists, for example, based on a determination that the event is an external event.

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). A computer-readable medium may include instructions for causing one or more processors to perform methods described herein. A computer program product may include instructions which, when the program is executed by one or more processors, may cause the one or more processors to carry out the methods described herein.

In examples, the device (e.g., video decoding device, video encoding device) may determine whether to apply energy adaptation NNPF. Based on a determination to apply energy adaptation NNPF, the device may obtain a metadata parameter set associated with energy adaptation NNPF. The device may include (e.g., in video data), at least an energy adaptation indication (e.g., flag) and/or the metadata parameter set NNPF indicating that energy adaptation NNPF may be applied.

A purpose (e.g., purpose metadata, new purpose metadata) may be included in a message (e.g., in the NNPFC SEI message), for example, that may indicate the energy consumption adaptation that can be applied as a post filter to the decoded image. Adapting the content using this post filter may lead to (e.g., a goal of) consuming less energy while displaying the content.

Additionally, through additional metadata, The purpose (e.g., included in the message, for example, through additional metadata) may enable the increase of the energy consumption (e.g., if the increase of energy consumption results in an increased quality of experience, e.g., above a threshold).

For example, details herein may be associated with energy reduction, energy increase, SEI signaling, neural network post filter characteristic(s), energy consumption, etc.

Purposes for the Neural-network post-filer characteristic SEI message may be added, provided, described, and/or used.

A message (e.g., NNPFC SEI message) may include purposes (e.g., tasks for a neural network, e.g., neural network post-filter). In examples, a purpose included in the message (e.g., NNPFC SEI message) may be associated with energy adaptation operations.

A purpose (e.g., purpose metadata, new purpose metadata) may be included in a message (e.g., in the NNPFC SEI message) for example, that may indicate the energy consumption adaptation that may be applied as a post filter to the decoded image. The content may be adapted using this new post filter, for example, to consume less energy e.g., while displaying the content (e.g., achieve a goal of consuming less energy e.g., while displaying the content).

The purpose (e.g., energy adaptation that may consume less energy e.g., while displaying the content) may be included in metadata (e.g., additional metadata) of the message (e.g., NNPFC SEI message).

Additionally, the purpose may enable (e.g., on the contrary) the increase of the energy consumption, for example, if (e.g., based on a determination), provided that the increase of energy consumption results in an increased quality of experience (e.g., above a threshold).

The purpose (e.g., energy adaptation that may consume more energy e.g., while displaying the content) may be included in metadata (e.g., additional metadata) of the message (e.g., NNPFC SEI message).

Syntax description associated with purposes included in message(s) (e.g., NNPFC SEI messages) may be described herein.

The purpose of the NNPF may be extended with a mode (e.g., new mode) associated with (e.g., dedicated to) energy adaptation. A modification and the associated semantics associated with including the purpose of the NNPF including a mode associated with energy adaptation may be described herein, for example, as shown in Table 2.

Table 2: Example modified list of purposes.

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | Energy adaptation (modification of the content to increase or decrease its energy consumption, e.g., at display side). |

A bitMask value may be used (e.g., given) as an example (e.g., another bitmask value could be used).

For example, a value for an indication (e.g., nnpfc_purpose) may be included (e.g., be in) the range of 0 to 511 (e.g., inclusive) in bitstreams. Values of 512 to 65,535 (e.g., inclusive), for nnpfc_purpose may be reserved, and may not be present in bitstreams.

The SEI message syntax may be modified, for example, as shown in Table 3:

Table 3: Example modified SEI message syntax

| nn_post_filter_characteristics( payloadSize ) { | **Descriptor** |
|---|---|
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1) { | |
| while( !byte_aligned( ) ) | |
| **nnpfc_alignment_zero_bit_a** | u(1) |
| **nnpfc_tag_uri** | st(v) |
| **nnpfc_uri** | st(v) |
| } | |

(continued)

| | |
|---|---|
| **nnpfc_property_present_flag** | u(1) |
| if( nnpfc_property_present_flag ) { | |
|   /* input and output formatting */ | |
|   **nnpfc_num_input_pics_minus**1 | ue(v) |
|   if( nnpfc_num_input_pics_minus1 > 0 ) { | |
|     for( i = 0; i <= nnpfc_num input_pics minus 1; i++ ) | |
|     **nnpfc_input_pic_filtering_flag[ i ]** | u(1) |
|     **nnpfc_absent_input_pic_zero_flag** | u(1) |
|   } | |
|   if( ChromaUpsamplingFlag ) | |
|     **nnpfc_out_sub_c_flag** | u(1) |
|   if( ColourizationFlag ) | |
|     **nnpfc_out_colour_format_idc** | u(2) |
|   if( ResolutionResamplingFlag ) { | |
|     **nnpfc_pic width num minus1** | ue(v) |
|     **nnpfc_pic width denom minus1** | ue(v) |
|     **nnpfc_pic_height_num_minus1** | ue(v) |
|     **nnpfc_pic height denom minus1** | ue(v) |
|   } | |
|   if(EnergyAdaptationFlag) { | |
|     nnpfc_energy_ratio | u(8) |
|     nnpfc_energy_ratio_sign_flag | u(1) |
|     nnpfc_quality_metric | u(3) |
|      nnpfc_expected_quality | u(8) |
|      nnpfc_display_model | u(4) |
|      nnpfc_energy_mode | u(8) |
|   } | |
|   if( PictureRateUpsamplingFlag ) | |
|     for( i = 0; i < nnpfc_num_input_pics_minus1; i++ ) | |
|      **nnpfc_interpolated_pics[ i ]** | ue(v) |
|   **nnpfc_component_last_flag** | u(1) |
|   **nnpfc_inp_format_idc** | ue(v) |
|   **nnpfc_auxiliary_inp_idc** | ue(v) |
|   **nnpfc_inp_order_idc** | ue(v) |
|   if( nnpfc_inp_format_idc = = 1) { | |
|     if( nnpfc_inp_order_dc != 1) | |
|      **nnpfc_inp_tensor_luma_bitdepth_minus8** | ue(v) |
|     if( nnpfc_inp_order_dc > 0 ) | |
|      **nnpfc_inp_tensor_chroma_bitdepth_minus8** | ue(v) |
|   } | |

(continued)

| | |
|---|---|
| **nnpfc_out_format_idc** | ue(v) |
| **nnpfc_out_order_idc** | ue(v) |
| if( nnpfc_out_format_idc = = 1) { | |
| if( nnpfc_out_order_idc != 1) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour-primaries** | u(8) |
| **nnpfc_transfer_characteristics** | u(8) |
| if( nnpfc_out_format_idc = = 1) { | |
| **nnpfc_matrix_coeffs** | u(8) |
| **nnpfc_full_range_flag** | u(1) |
| } | |
| } | |
| if( nnpfc_out_order_idc > 0 ) | |
| **nnpfc_chroma_loc_info_present_flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc_constant_patch_size_flag** | u(1) |
| if( nnpfc_constant_patch_size_flag ) { | |
| **nnpfc_patch width minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |
| **nnpfc_padding_type** | ue(v) |
| if( nnpfc_padding_type = = 4 ) { | |
| if( nnpfc_inp_order_dc != 1) | |
| **nnpfc_luma_padding_val** | ue(v) |
| if( nnpfc_inp_order_dc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |

(continued)

| | |
|---|---|
| if( nnpfc_complexity_info_present_flag ) { | |
| **nnpfc_parameter type idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) | |
| **nnpfc_reserved_metadata_extension** | u(v) |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte[** i ] | b(8) |
| } | |
| } | |

Variables (e.g., variables ChromaUpsamplingFlag, ResolutionResamplingFlag, PictureRateUpsamplingFlag, BitDepthUpsamplingFlag, ColourizationFlag, TemporalExtrapolationFlag, SpatialExtrapolationFlag, and/or EnergyAdaptationFlag) may specify whether nnpfc_purpose indicates the purpose of the NNPF to include one or more of the following: chroma upsampling, resolution resampling, picture rate upsampling, bit depth upsampling, colourization, temporal extrapolation, and/or energy adaptation. The variables may be determined (e.g., derived), for example, according to Eqs 1-8.

$$\text{ChromaUpsamplingFlag} = ( ( \text{nnpfc\_purpose} \ \& \ 0x02 ) > 0 ) \ ? \ 1 : 0 \qquad \text{Eq. 1}$$

$$\text{ResolutionResamplingFlag} = ( ( \text{nnpfc\_purpose} \ \& \ 0x04 ) > 0 ) \ ? \ 1 : 0 \qquad \text{Eq. 2}$$

$$\text{PictureRateUpsamplingFlag} = ( ( \text{nnpfc\_purpose} \ \& \ 0x08 ) > 0 ) \ ? \ 1 : 0 \qquad \text{Eq. 3}$$

$$\text{BitDepthUpsamplingFlag} = ( ( \text{nnpfc\_purpose} \ \& \ 0x10 ) > 0 ) \ ? \ 1 : 0 \qquad \text{Eq. 4}$$

$$\text{ColourizationFlag} = ( ( \text{nnpfc\_purpose} \ \& \ 0x20 ) > 0 ) \ ? \ 1 : 0 \qquad \text{Eq. 5}$$

$$\text{TemporalExtrapolationFlag} = ( ( \text{nnpfc\_purpose} \ \& \ 0x40 ) > 0 ) \ ? \ 1 : 0 \qquad \text{Eq. 6}$$

$$\text{SpatialExtrapolationFlag} = ( ( \text{nnpfc\_purpose} \ \& \ 0x80 ) > 0 ) \ ? \ 1 : 0 \qquad \text{Eq. 7}$$

$$\text{EnergyAdaptationFlag} = ( ( \text{nnpfc\_purpose} \ \& \ 0x100 ) > 0 ) \ ? \ 1 : 0 \qquad\qquad \text{Eq. 8}$$

For example, an indication (e.g., nnpfc_energy_ratio)_ (e.g., if/when EnergyAdaptationFlag is equal to 1) may specify the amount of energy reduction or augmentation (e.g., accordingly with the value of the nnpfc energy_ratio sign flag field) e.g., at a display the Energy Adaptation post-filter may (e.g., should) achieved. The amount of energy reduction or augmentation may be coded over 8 bits.

For example, an indication (e.g., nnpfc energy_ratio sign flag) may specify if the value of an NNPFC energy ratio (e.g., nnpfc_energy_ratio) may (e.g., should) be considered as negative or positive. The use of the NNPF may result in a gain in terms of energy, for example, if an indication (e.g., nnpfc energy_ratio sign flag) equals 0. The use of the NNPF may result in a loss in terms of energy, for example, if an indication (e.g., nnpfc energy_ratio sign flag) equals 1.

For example, an indication (e.g., nnpfc_expected_quality) may specify the quality of the displayed video, e.g., after applying the energy adaptation neural network post filter. Examples of metrics may include PSNR, V-MAF or SSIM values for the modified picture after applying the neural network post filter as shown by example in Table 4. This parameter may be expressed as an absolute value or as a percentage value of reduction of quality, for example, according to a selected quality metric in comparison with its nominal value.

For example, an indication (e.g., nnpfc_quality_metric) may indicate the quality metric to be considered, for example, if (e.g., when) considering the level of quality when performing the balancing between the quality and the energy adaptation.

Table 4: Example NNPFC quality metric syntax

| nnpfc_quality_metric field value | Metric name |
|---|---|
| 0x00 | PSNR |
| 0x01 | SSIM |
| 0x02 | wPSNR |
| 0x03 | WS-PSNR |
| 0x04 | V-MAF |
| 0x05..0x07 | Reserved for future metrics |

For example, an indication (e.g., nnpfc display_model) may include a bit field mask that may indicate the display models on which the energy adaptation neural network post filter may be used (e.g., in case it targets the modification of the energy consumption at the display side). For example, Table 5 illustrates an example interpretation of bits of a nnpfc display_model.

Table 5: Interpretation of the bits of nnpfc display_model.

| Bit number | Display model |
|---|---|
| 0 | Transmissive pixel |
| 1 | Emissive pixel |
| 2..3 | Reserved for future types |

In examples, an indication (e.g., nnpfc display_type_field=11 2) may indicate that the NNPF can be used for both "Transmissive pixel" and "Emissive pixel" display models.

In examples, metadata (e.g., additional metadata) may be included to be associated with an energy mode. This metadata (e.g., associated with an energy mode) may be described herein.

For example, an indication in metadata (e.g., nnpfc_energy_mode) may specify the type of energy adaptation that may be applied to content. Examples of possible energy modification modes may include modes related to luminance adaptation while controlling the content energy consumption, color adaptation while controlling the power consumption, Spatial Alternating Complementary Colors (SACC), Temporal Alternating Complementary Colors (TACC), and/or Double replacing Colors in Video (e.g., spatial ACC mode, temporal ACC mode and video ACC mode). For example an indication (e.g., nnpfc_energy_mode == 0) may indicate the luminance adaptation mode, an indication (nnpfc_energy_mode == 1) may indicate the color adaptation mode, an indication (nnpfc_energy_mode == 2) may indicate the spatial ACC mode. For example, an indication (e.g., nnpfc_energy_mode == 3) may indicate the temporal ACC mode. For example, an indication (e.g., nnpfc_energy_mode == 4) may indicate the video ACC mode.

In examples, an indication(s) (e.g., nnpfc_ratio_sign_flag, nnpfc_quality_metric, nnpfc_expected_quality, nnpfc display_model, nnpfc_energy_mode) may be included, for example, as metadata (e.g., optional metadata).

In examples, the energy adaptation may be performed (e.g., done) to adapt the energy consumption of some other equipment (e.g., the decoder itself). A post filter (e.g., some additional post filters) may be applied after the present NNPF for Energy Adaptation, etc.

Syntax (e.g., wordings) relating to the metadata described herein may be chosen without modification of the details described herein.

Energy categories may be indicated.

For example, energy ratios may be indicated. As shown in Table 6, a semantic could be given (e.g., coded over 2 bits).

Table 6: Example Energy Ratio Indication

| nnpfc_energy_ratio | Interpretation |
| --- | --- |
| 0 | The energy ratio is 5% |
| 1 | The energy ratio is 10% |
| 2 | The energy ratio is 20% |
| 3 | The energy ratio is 30% |

A percentage (e.g., energy ratio) may be indicated.

In examples, an indication (e.g., nnpfc_energy_ratio) may specify the amount of energy adaptation the post-filter may (e.g., should) achieve, for example, by using coded by values between 0 and 100 which may be coded over 7 bits.

An energy ratio (e.g., NNPF energy ratio; nnpf_energy_ratio) may correspond to a value (e.g., a signed value).

In examples, an energy ratio indication (e.g., the nnpfc_energy_ratio) may be interpreted according to one or more of the following (e.g., nnpfc energy_ratio sign flag may be refrained from being used/signaled, but the range of ratio values may be smaller): values below 128 may be considered as negative; values above 128 may be considered as positive; value = 0 may indicate (e.g., correspond to) a loss of energy (e.g., equal to 30%); value = 255 may indicate (e.g., correspond to) a gain of energy (e.g., equal to 30%).

An energy balance (e.g., absolute energy balance) may be specified.

In examples, an indication associated with energy ratio (e.g., the nnpf_energy_ratio) may specify an energy balance (e.g., global absolute balance in terms of energy), for example, considering both the energy consumed while applying the NNPF Energy Adaptation filter and the energy saved or lost while using the content consequently to the application of the NNPF. In this case syntax may be modified with respect to energy ratio. For example, an indication (e.g., nnpfc_energy_ratio) may indicate (e.g., specify) the balance in terms of energy, for example, considering both the energy consumed while applying the NNPF filter and the energy saved or lost while using the content consequently to the application of the NNPF.

The NNPF may have an input and/or output (e.g., different input and/or output).

The neural network post filter may process components (e.g., the YUV components and/or the RGB components), for example, depending on the type of the specified filter. In this case, an indication (e.g., the flag nnpfc separate colour description_present flag) may indicate to enable to specify the color transformation.

In examples, an NNPFC separate colour description present indication (e.g., NNPFC separate colour description present flag) may be signaled and/or determined. The NNPFC separate colour description present indication may indicate whether NNPFC separate colour description present is enabled. YUV components or RBG components of the content may be processed, for example, based on a determination that the NNPFC separate colour description present indication is enabled. The YUV components or RBG components may be processed based on an energy adaptation NNPF filter type.

In examples, the input post filter may be YUV and the output may also be YUV.

Strategies associated with neural network post filter for processing components may be described herein.

For example, a post filter may modify the Y component (e.g., only modify the Y component), where U and V components may be refrained from being changed (e.g., not changed).

For example, a post filter may compute a Y component (e.g., a new Y component) from an incoming Y component. The RGB values of the input image may be modified, for example, by multiplying the RGB components by the ratio of the luminance. In this context, two color transformations may be performed (e.g., made), such as, for example YUV to RGB and/or the modified RGB to YUV.

Neural network post-filters may be implemented.

FIG. 5 illustrates an example implementation of a neural network post-filter.

As shown in FIG. 5, the SEI NNPFC message may be received (e.g., decoded). The SEI NNPFC message may include an energy adaptation indication (e.g., energy adaptation flag) and/or a metadata parameter set (e.g., indication of NNPFC energy ratio and/or indication of NNPFC energy ratio sign). The SEI NNPFC message may be checked to determine whether an energy adaptation indication (e.g., EnergyAdaptationFlag) is activated or not (e.g., determine whether energy adaptation is activated based on the energy adaptation indication). The content may be sent to the display without modification, for example, if the energy adaptation is not activated. The ratio value and/or potential sign metadata (e.g., metadata parameters set from the NNPFC SEI message) may be determined (e.g., recovered), for example, based on a determination (e.g., if) the energy adaptation is activated. The NNPFC energy ratio sign may indicate the sign of the NNPFC energy ratio. The NNPFC energy ratio may indicate an amount of energy reduction or augmentation. The NNPFC energy ratio may indicate a percentage of energy ratio and/or an amount of energy adaptation the energy adaptation NNPF may (e.g., should) achieve. The NNPFC energy ratio may indicate a balance of energy between energy consumed while applying the energy adaptation NNPF and/or energy saved or lost while displaying the modified content. The NNPF corresponding to the energy adaptation indication (e.g., EnergyAdaptationFlag) and/or corresponding with the ratio value and sign may be applied on the content (e.g., apply an energy adaptation NNPF associated with the energy adaptation indication and/or metadata parameters to generate a modified content), for example, before sending it to the display.

In other examples, additional metadata parameters (e.g., a metadata parameter set) may include one or more of the following: NNPFC expected quality, NNPFC quality metric, NNPFC display model; NNPFC energy mode; etc. An NNPFC expected quality may indicate a quality of modified content after applying an energy adaptation NNPF. An NNPFC video quality metric may indicate a quality metric to be considered if (e.g., when) considering a level of quality if (e.g., when) performing balancing between quality and energy adaptation. An NNPFC display model may indicate at least one display model on which energy adaptation NNPF may be used (e.g., applied). An NNPFC energy mode may indicate an energy adaptation type being applied to the content. The NNPF corresponding to the energy adaptation indication (e.g., EnergyAdaptationFlag) and/or corresponding with the ratio value and sign and these additional parameters may be applied on the content (e.g., apply an energy adaptation NNPF associated with the energy adaptation indication and/or metadata parameters to generate a modified content), for example, before sending it to the display.

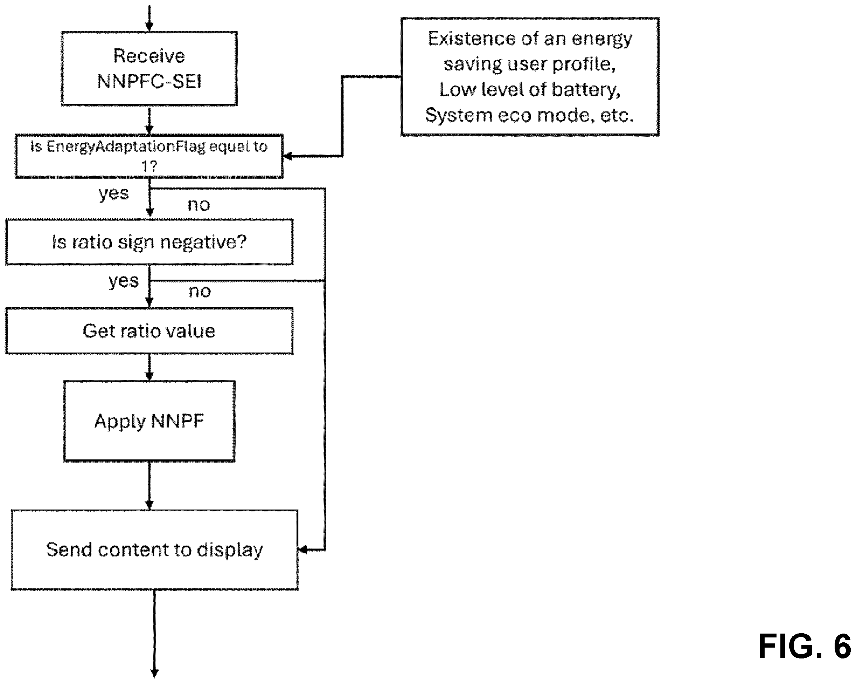

FIG. 6 illustrates an example implementation of a neural network post-filter.

As shown in FIG. 6, a SEI NNPFC message may be received (e.g., decoded). Whether the energy adaptation indication (e.g., EnergyAdaptationFlag) is activated or not may be checked, for example, if an event or external event (e.g., an energy adaptation of a decreasing trend (e.g., a user profile corresponding to some eco mode, a low level of battery, a system decision also corresponding to some eco mode); an extra battery level) is associated with (e.g., requires) decreasing or increasing the energy consumption of the content e.g., when displayed. The content may be sent to e.g., the display without applying the NNPF for energy adaptation, for example, if the energy adaptation indication is not activated. Whether the energy adaptation goes towards a decrease in terms of energy (e.g., the ratio sign is negative) may be checked (e.g., a determination that the event indicates decreasing energy consumption of the content when e.g., displayed), for example, if the energy adaptation indication is activated. A determination that the event indicates decreasing energy consumption of the content when displayed may be done e.g., based on the determination that an energy saving user profile may be determined to exist. The content may be sent to the display (e.g., as is), for example, if the energy adaptation does not go toward a decrease in terms of energy (e.g., the ratio sign is not negative, e.g., is positive). The ratio value (e.g., ratio value metadata) may be recovered, for example, if the energy adaptation goes toward a decrease in terms of energy (e.g., the ratio sign is negative). The NNPF corresponding to an energy adaptation indication (e.g., the EnergyAdaptationFlag) and with the ratio value and sign may be applied on the content, for example, before sending it to e.g., the display.

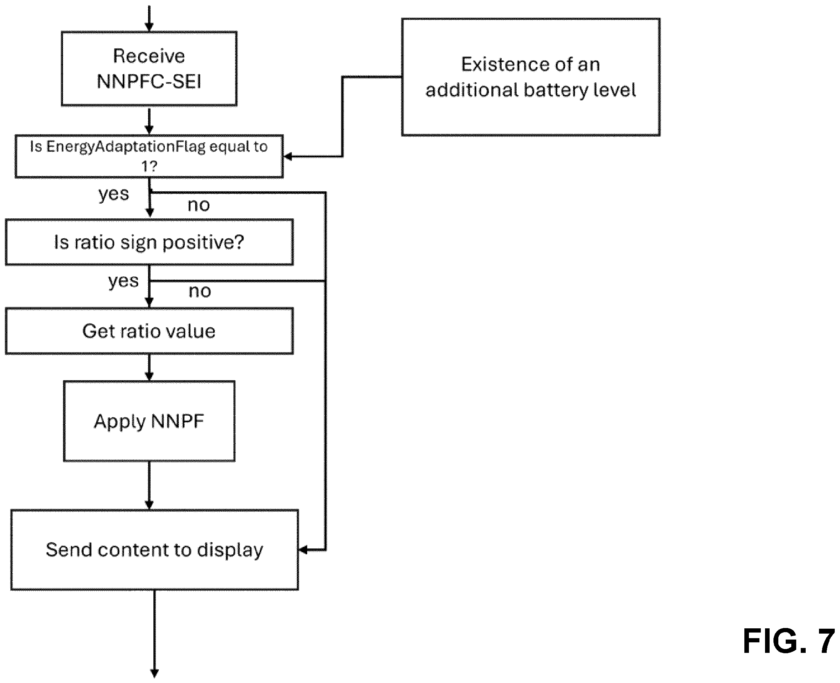

FIG. 7 illustrates an example implementation of a neural network post-filter with an extra level of battery. An existence of an extra level of battery may be associated with a modified NNPF application, as shown in FIG. 7. For example, the NNPFC-SEI message may be received (e.g., decoded). Whether the energy adaptation indication is activated (e.g., equal to 1) may be based on the existence of an additional battery level. Content may be sent to the display (e.g., as is), for example, based on a determination that the energy activation indication is not activated (e.g., not equal to 1). The ratio sign may be checked (e.g., whether the ratio sign is positive), for example, based on a determination that the energy activation indication is activated. Content may be sent to the display (e.g., as is), for example, based on a determination that the ratio sign is not positive (e.g., is negative). The ratio value may be determined, for example, based on a determination that the ratio sign is positive. NNPF may be applied based on the determined ratio value. The content may be sent to e.g., the display (e.g., based on the applied NNPF).

In examples, it may be checked that the energy activation indication is activated (e.g., EnergyAdaptationFlag is set to 1). A corresponding NNPF may be determined to be activated or not activated (e.g., based on the energy adaptation indication flag being activated), for example, based on a detection of an external event (e.g., eco user profile mode, extra battery level, etc.).

In examples, whether the display model (e.g., required display model) corresponds to the one of the display may be checked. Based on the display model, the NNPF for energy adaptation may be applied or not.. Whether the expected quality after application of the NNPF is higher than a quality threshold set (e.g., set in the user profile, the system requirements, etc.) may be checked. Based on the level of quality, the NNPF for energy adaptation may be applied or not.

The details (e.g., as described herein) related to neural network post filters may be associated with video coding/decoding, distribution, energy consumption, etc.

The presence of the NNPFC SEI message with a purpose flag associated with Energy Adaptation can be checked. The presence of its related metadata can also be checked. The message may be included in video data or a bitstream.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A video decoding device comprising a processor configured to at least:

    decode a neural-network post-filter characteristics (NNPFC) SEI message, wherein the NNPFC SEI message comprises at least an energy adaptation flag and a metadata parameter set comprising at least an indication of NNPFC energy ratio;
    determine, based on the energy adaptation flag, whether energy adaptation is activated;
    based on a determination that that the energy adaptation is activated, obtain the metadata parameters set from the NNPFC SEI message; and
    apply an energy adaptation neural-network post-filter (NNPF) associated with the energy adaptation flag and the metadata parameters set to a content to generate a modified content.

2. A video encoding device comprising a processor configured to at least:

    determine whether to apply energy adaptation neural-network post-filter (NNPF);
    based on a determination to apply energy adaptation NNPF, obtain a metadata parameter set associated with energy adaptation NNPF; and
    include, in video data, at least an energy adaptation flag and the metadata parameter set neural-network post-filter indicating that energy adaptation NNPF is to be applied.

3. The device of any of claim 1 or claim 2, wherein the metadata parameter set further comprises an indication of NNPFC energy ratio sign, and wherein the energy adaptation flag indicates whether modification of the content by increasing or decreasing energy consumption associated with the content is activated, , and the NNPFC energy ratio sign indicates the sign of the NNPFC energy ratio, and wherein the NNPFC energy ratio indicates an amount of energy reduction or augmentation.

4. The device of any of claim1 to claim 3, wherein the metadata parameter set further comprises at least one of an NNPFC expected quality, an NNPFC quality metric, an NNPFC display model, or an NNPFC energy mode, wherein the NNPFC expected quality indicates quality of the modified content after applying the energy adaptation NNPF, the NNPFC quality metric indicates a quality metric to be considered when considering modification of quality when performing energy adaptation, an NNPFC display model indicates at least one display model on which the energy adaptation NNPF may be used, and the NNPFC energy mode indicates an energy adaptation type being applied to the content.

5. The device of any of claim 1 to claim 4, wherein the NNPFC energy ratio indicates an energy category, a percentage of energy ratio or an amount of energy adaptation the energy adaptation NNPF should achieve.

6. The device of any of claim 1 to claim 5, wherein the NNPFC energy ratio indicates a balance of energy between energy consumed while applying the energy adaptation NNPF filter and energy saved or lost while using the modified content.

7. The device of any of claim 1 or claim 3 to claim 5, wherein the processor is configured to:

   determine an NNPFC separate colour description present flag; and
   based on a determination that the NNPFC separate colour description present flag is enabled, process YUV components or RGB components of the content, wherein the YUV components or the RGB components of the content are processed based on an energy adaptation NNPF filter type.

8. The device of any of claim 1 to claim 7, wherein the processor is configured to determine that an event is triggered, wherein the event indicates decreasing or increasing energy consumption of the content when used, wherein the event is an internal event or an external event, and wherein the energy adaptation NNPF associated with the energy adaptation flag and the metadata parameter set is applied based on a determination that the NNPFC energy ratio sign indicates that the energy adaptation is of a decreasing or increasing trend.

9. The device of claim 8, wherein the processor is configured to:

   based on the existence of at least one of an energy saving user profile, a low level of battery, or a system decision associated with an eco mode, determine that the event indicates decreasing energy consumption of the content when used; and
   based on the existence of at least one of a user profile for increased energy, an additional battery, or a system decision associated with a quality mode determine that the event indicates increasing energy consumption of the content when used.

10. A video decoding method comprising:

    decoding a neural-network post-filter characteristics (NNPFC) SEI message, wherein the NNPFC SEI message comprises at least an energy adaptation flag and a metadata parameter set comprising at least an indication of NNPFC energy ratio;
    determining, based on the energy adaptation flag, whether energy adaptation is activated;
    based on a determination that that the energy adaptation is activated, obtaining the metadata parameters set from the NNPFC SEI message; and
    applying an energy adaptation neural-network post-filter (NNPF) associated with the energy adaptation flag and the metadata parameters set to a content to generate a modified content.

11. A video encoding method comprising:

    determining whether to apply energy adaptation neural-network post-filter (NNPF);
    based on a determination to apply energy adaptation NNPF, obtaining a metadata parameter set associated with energy adaptation NNPF; and
    including, in video data, at least an energy adaptation flag and the metadata parameter set neural-network post-filter indicating that energy adaptation NNPF is to be applied.

12. The method of any of claim 10 or claim 11, wherein the metadata parameter set further indicates an indication of NNPFC energy ratio sign, and wherein the energy adaptation flag indicates whether modification of the content by increasing or decreasing energy consumption associated with the content is activated, and the NNPFC energy ratio sign indicates the sign of the NNPFC energy ratio, and the NNPFC energy ratio indicates an amount of energy reduction or augmentation.

13. The method of any of claim 10 to claim 12, wherein the metadata parameter set further comprises at least one of an NNPFC expected quality, an NNPFC quality metric, an NNPFC display model, or an NNPFC energy mode, wherein the NNPFC expected quality indicates quality of the modified content after applying the energy adaptation NNPF, the NNPFC quality metric indicates a quality metric to be considered when considering modification of quality when performing energy adaptation, an NNPFC display model indicates at least one display model on which the energy adaptation NNPF may be used, and the NNPFC energy mode indicates an energy adaptation type being applied to the content.

14. The method of any of claim 10 to claim 13, wherein the NNPFC energy ratio indicates an energy category, a percentage of energy ratio or an amount of energy adaptation the energy adaptation NNPF should achieve.

15. The method of any of claim 10 to claim 14, wherein the NNPFC energy ratio indicates a balance of energy between energy consumed while applying the energy adaptation NNPF filter and energy saved or lost while using the modified content.

**FIG. 1A**

EP 4 676 040 A1

**FIG. 1B**

FIG. 1C

**FIG. 1D**

FIG. 2

**300**

FIG. 3

EP 4 676 040 A1

FIG. 4

Receive
NNPFC-SEI

Is EnergyAdaptationFlag equal to 1?

yes    no

Get ratio value and sign

Apply NNPF

Send content to display

**FIG. 5**

```
          ┌──────────────┐              ┌──────────────────────┐
          │   Receive    │              │  Existence of an energy │
          │   NNPFC-SEI  │              │   saving user profile,  │
          └──────────────┘              │   Low level of battery, │
                 │                      │  System eco mode, etc.  │
                 ▼                      └──────────────────────┘
       ┌─────────────────────┐                    │
       │ Is EnergyAdaptationFlag equal to ◄────────┘
       │          1?         │
       └─────────────────────┘
         yes        no
          │
          ▼
       ┌─────────────────────┐
       │ Is ratio sign negative? │
       └─────────────────────┘
         yes        no
          │
          ▼
       ┌─────────────────────┐
       │   Get ratio value   │
       └─────────────────────┘
                 │
                 ▼
          ┌──────────────┐
          │  Apply NNPF  │
          └──────────────┘
                 │
                 ▼
       ┌─────────────────────┐
       │ Send content to display │◄──────
       └─────────────────────┘
                 │
                 ▼
```

FIG. 6

EP 4 676 040 A1

**FIG. 7**

Flowchart:

- Receive NNPFC-SEI
- Existence of an additional battery level
- Is EnergyAdaptationFlag equal to 1?
  - yes → Is ratio sign positive?
    - yes → Get ratio value → Apply NNPF → Send content to display
    - no → Send content to display
  - no → Send content to display

| | Europäisches Patentamt European Patent Office Office européen des brevets | **EUROPEAN SEARCH REPORT** | Application Number EP 24 30 6102 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "[AHG9]: Neural network post-filter for recovering images from energy-aware images", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0126 ; m67196 17 April 2024 (2024-04-17), XP030317431, Retrieved from the Internet: URL:https://jvet-experts.org/doc_end_user/documents/34_Rennes/wg11/JVET-AH0126-v2.zip JVET-AH0126.docx [retrieved on 2024-04-17] | 1-6,8-15 | INV. H04N19/117 H04N19/70 H04N19/156 H04N19/85 |
| Y | * abstract * * section 1, last line in Table 1, lines 17-18 on page 3, fourth line from bottom of page 3, last paragraph of section 2 on page 5, section 3 * * figure 1 * | 7 | |

-----

-/--

TECHNICAL FIELDS SEARCHED (IPC)

H04N

The present search report has been drawn up for all claims

| Place of search | Date of completion of the search | Examiner |
|---|---|---|
| The Hague | 17 December 2024 | La, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................
& : member of the same patent family, corresponding document

EPO FORM 1503 03.82 (P04C01)

page 1 of 4

Europäisches
Patentamt

European
Patent Office

Office européen
des brevets

## EUROPEAN SEARCH REPORT

**Application Number**

EP 24 30 6102

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MCCARTHY (DOLBY) S ET AL: "AHG9: Neural-network post filtering SEI message", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0121 ; m59453 22 April 2022 (2022-04-22), XP030300974, Retrieved from the Internet: URL:https://jvet-experts.org/doc_end_user/ documents/26_Teleconference/wg11/JVET-Z012 1-v2.zip JVET-Z0121_v2.docx [retrieved on 2022-04-22] * lines 3-5 of Table in section 2.1.2.1 and first two paragraphs on page 5 * ----- -/-- | 7 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 17 December 2024 | La, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 30 6102

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Text of ISO/IEC 23002-7:202x (2nd Ed.) DAM1 Additional SEI messages", 140. MPEG MEETING; 20221024 - 20221028; MAINZ; (MOTION PICTURE EXPERT GROUP OR ISO/IEC JTC1/SC29/WG11), , no. n21947 10 November 2022 (2022-11-10), XP030306094, Retrieved from the Internet: URL:https://dms.mpeg.expert/doc_end_user/d ocuments/140_Mainz/wg11/MDS21947_WG05_N001 58.zip WG5_N0158_Additional_SEI_23002-7_DAM1_text .pdf [retrieved on 2022-11-10] * section 8.28.1 on pages 4-6 * * paragragh on "nnpfc_complexity_info_present_flag" and paragraghs on "nnpfc_num_parameters_idc" on pages 18-19, paragragh on "nnpfc_num_kmac_operations_idc" and paragragh on "nnpfc_total_kilopbyte_size" on page 19 * * section 8.29 * ----- | 1-15 | |
| A | US 2017/237988 A1 (NOGUES ERWAN [FR] ET AL) 17 August 2017 (2017-08-17) * [0006], [0007], [0011]-[0015], [0024], [0029]-[0031], [0034], [0039], [0049]-[0051], [0057], [0067] * ----- -/-- | 1-15 | **TECHNICAL FIELDS SEARCHED (IPC)** |

The present search report has been drawn up for all claims

| Place of search | Date of completion of the search | Examiner |
|---|---|---|
| The Hague | 17 December 2024 | La, Valérie |

EPO FORM 1503 03.82 (P04C01)

page 3 of 4

Europäisches
Patentamt

European
Patent Office

Office européen
des brevets

## EUROPEAN SEARCH REPORT

**Application Number**

EP 24 30 6102

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 12 022 091 B2 (INTERDIGITAL CE PATENT HOLDINGS SAS [FR]) 25 June 2024 (2024-06-25) <br> * column 1, line 66 - column 2, line 32 * <br> * column 2, line 61 - line 64 * <br> * column 3, line 65 - column 4, line 8 * <br> * column 11, line 7 - line 17 * <br> * column 19, line 61 - column 20, line 53 * <br> * column 21, line 15 - column 23, line 6 * <br> * column 28, line 23 - line 35 * <br> * column 29, line 29 - column 30, line 35 * <br> * figure 6 * <br> ----- | 1-15 | |
| A | US 2023/379482 A1 (FRANCOIS EDOUARD [FR] ET AL) 23 November 2023 (2023-11-23) <br> * [0028], [0060], [0061], [0182], [0183], [0233], [0238] * <br> ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 17 December 2024 | La, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

page 4 of 4

## ANNEX TO THE EUROPEAN SEARCH REPORT
## ON EUROPEAN PATENT APPLICATION NO.

EP 24 30 6102

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2024

| Patent document cited in search report | | | Publication date | Patent family member(s) | | Publication date |
|---|---|---|---|---|---|---|
| US 2017237988 | A1 | | 17-08-2017 | CN | 107211127 A | 26-09-2017 |
| | | | | EP | 3207702 A1 | 23-08-2017 |
| | | | | FR | 3027480 A1 | 22-04-2016 |
| | | | | FR | 3027481 A1 | 22-04-2016 |
| | | | | US | 2017237988 A1 | 17-08-2017 |
| | | | | WO | 2016059196 A1 | 21-04-2016 |
| US 12022091 | B2 | | 25-06-2024 | CN | 116158074 A | 23-05-2023 |
| | | | | EP | 4186232 A1 | 31-05-2023 |
| | | | | US | 2023291910 A1 | 14-09-2023 |
| | | | | WO | 2022017845 A1 | 27-01-2022 |
| US 2023379482 | A1 | | 23-11-2023 | CN | 116438795 A | 14-07-2023 |
| | | | | EP | 4226610 A1 | 16-08-2023 |
| | | | | JP | 2023544711 A | 25-10-2023 |
| | | | | US | 2023379482 A1 | 23-11-2023 |
| | | | | WO | 2022073811 A1 | 14-04-2022 |

EPO FORM P0459